# EUROPÄISCHE PATENTSCHRIFT

(11) **EP 0 632 062 B1**
(45) Veröffentlichungstag und Bekanntmachung des Hinweises auf die Patenterteilung: **08.10.1997**
(21) Anmeldenummer: 94107821.4
(22) Anmeldetag: 20.05.1994
(51) Int. Cl.: C08F 8/50, C08F 110/06

(54) **Neue, durch chemische Degradierung erhältliche Polypropylene**
New polypropylenes obtainable by chemical degrading
Nouveaux polypropylènes susceptible d'être obtenu par la dégradation chimique

(30) Priorität: 07.06.1993 AT 1099/93
(43) Veröffentlichungstag der Anmeldung: 04.01.1995
(73) Patentinhaber: PCD-Polymere Gesellschaft m.b.H., A-2323 Schwechat-Mannswörth (AT)
(72) Erfinder: Gahleitner, Markus, Dipl.-Ing. Dr., A-4501 Neuhofen (AT); Bernreitner, Klaus, Dipl.-Ing., A-4020 Linz (AT); Hafner, Norbert, Dipl.-Ing. Dr., A-4020 Linz (AT); Wölfer, Rudolf, Dipl.-Ing., A-4020 Linz (AT); Neissl, Wolfgang, Dipl.-Ing. Dr., A-4040 Neulichtenberg (AT)
(74) Vertreter: Kunz, Ekkehard, Dr.

(56) Entgegenhaltungen:
- EP-A- 0 063 654
- EP-A- 0 497 590
- AT-B- 319 589
- DE-A- 1 495 275
- DE-A- 3 401 612
- US-A- 3 144 436
- US-A- 5 047 485

## Beschreibung

Die Erfindung betrifft neue Polypropylene mit verbesserten Eigenschaften, die durch chemische Degradierung mit Peroxiden erhalten werden.

In der US 4,335,225, US 4,522,982 und US 5,118,768 werden elastische Polypropylene beschrieben, die durch Polymerisation mittels spezieller Katalysatoren erhältlich sind. Diese Produkte besitzen zwar eine gewisse Elastizität, sie sind jedoch aufgrund ihrer Steifigkeit für viele Anwendungen ungeeignet. Wenn für spezielle Einsatzgebiete Polypropylene gefordert werden, die sowohl weich als auch elastisch sind, ist es beispielsweise möglich, den Polypropylenen Elastomere zuzumischem, beispielsweise amorphe Copolymere auf Basis von Ethylen und Propylen (EPR) oder von Ethylen-Propylen-Dien-Monomeren (EPDM). Diese Blends besitzen jedoch den Nachteil, daß sie sehr hohe Viskositäten aufweisen, demnach nur schwerfließend sind und schwierig bzw. nur unter Zusatz von Weichmachern verarbeitet werden können.

Es stellte sich demnach die Aufgabe, die Nachteile der bekannten Polypropylene zu vermeiden, und Polypropylene bereitzustellen, die ein optimales Eigenschaftsprofil aufweisen und insbesondere sowohl weich und elastisch, als auch leichtfließend sind. Derartige neue Polypropylene können erfindungsgemäß durch chemische Degradierung von elastischen Polypropylenen erhalten werden.

Gegenstand der Erfindung sind demnach neue Polypropylene mit verbessertem Eigenschaftsprofil, die durch chemische Degradierung von elastischen Polypropylenen mit stereoregulärer Blockanordnung in der Polymerkette oder Gemischen von Polypropylenen und elastischen Polypropylenen mit stereoregulärer Blockanordnung in der Polymerkette mittels organischer Peroxide, gegebenenfalls unter Zusatz von Stabilisatoren erhalten werden.

Ein weiterer Gegenstand der Erfindung ist ein Verfahren zur Herstellung von neuen Polypropylenen mit verbessertem Eigenschaftsprofil, bei dem elastische Polypropylene mit stereoregulärer Blockanordnung in der Polymerkette oder Gemische von Polypropylenen und elastischen Polypropylenen mit stereoregulärer Blockanordnung in der Polymerkette mittels organischer Peroxide, gegebenenfalls unter Zusatz von Stabilisatoren, degradiert werden.

Die Tatsache, daß bei der erfindungsgemäßen chemischen Degradierung von elastischen Polypropylenen Produkte mit niedriger Molmasse und geringerer Viskosität erhalten werden, die sowohl elastischer und dehnbarer als auch weicher und weniger steif sind als die Ausgangspolypropylene, ist insbesondere deshalb überraschend, da Polypropylene mit niedriger Molmasse bzw. hoher Fließfähigkeit gerade umgekehrt, steifer und weniger weich sowie weniger elastisch bzw. weniger dehnbar sind als vergleichbare Materialien mit hoher Molmasse.

Die für die Degradierung eingesetzten elastischen Polypropylene sind insbesondere solche, wie sie in der US 4,335,225, US 4,522,982 und US 5,118,768 beschrieben sind. Darunter sind sowohl Homopolymere als auch Copolymere zu verstehen. Sie besitzen im wesentlichen eine stereoreguläre Blockanordnung im Kettenaufbau und bestehen beispielsweise aus Blöcken von isotaktischen und ataktischen Propylensequenzen, die abwechselnd in der Polymerkette angeordnet sind. Auch der Einbau von zusätzlichen Comonomeren in die Polymerkette ist möglich. Die Copolymere können neben Propylen-Einheiten auch andere Olefineinheiten, wie z. B. Ethylen-, Buten-, Penten- oder Hexeneinheiten im Molekül enthalten. Ihre Herstellung gelingt beispielsweise gemäß US 4,335,225 durch Polymerisation mit speziellen Katalysatoren, die durch Reaktion oder Mischen von organischen Ti-, Zr- oder Hf-Verbindungen mit einem Metalloxid wie z. B. Al₂O₃, TiO₂, SiO₂ oder MgO erhalten werden. Die erfindungsgemäß eingesetzten elastischen Polypropylene enthalten bevorzugt einen etherlöslichen Anteil von 10 - 80 Gew.%. Sie weisen bevorzugt eine Fließfähigkeit von unter 0,1 g/10 min auf (melt flow index/MFI 230°C, 2,16 kg gemäß ISO 1133/DIN 53735). Weiters können die für die Degradierung eingesetzten elastischen Polypropylene beispielsweise auch analog zu US 4,522,982 mit Hilfe von Metallocen-Katalysatoren in Kombination mit Aluminoxanen oder analog zu US 5,118,768 mit Katalysatoren auf Basis von Magnesiumalkoxiden und tetravalentem Titanchlorid in Gegenwart spezieller Elektronendonoren hergestellt werden.

Die elastischen Polypropylene können erfindungsgemäß für sich allein degradiert werden, oder aber im Gemisch mit anderen Polypropylenen. Als andere Polypropylene können alle bekannten Polypropylen-Homopolymere bzw. Copolymere mit anderen Olefinen eingesetzt werden. Die Gemische bestehen bevorzugt aus elastischen Polypropylenen mit einem Gehalt von 0 bis 80 Gew.% an anderen Polypropylenen.

Als organische Peroxide kommen beispielsweise Di-tert.butyl-peroxid, Benzoylperoxid, Laurylperoxid, Cyclohexanon-peroxid, Tert.butyl-peroxy-isopropylcarbonat, 2,5-Dimethyl-2,5-bis(tert.butylperoxy)-hexin-3, 1,1-4,4-7, 7-Hexamethyl-cyclo-4, 7-diperoxynonan, 1,3-Bis-(tert.butylperoxy-isopropyl)-benzol, 3,3-6,6-9,9Hexamethylcyclo-1,2,4,5-tetraoxanonan, 2,5-Dimethyl-2,5-bis-(tert.butylperoxy)-hexan und Phthalidperoxide, z. B. 3-Phenyl-3-tert-butyl-peroxyphthalid, wie sie z. B. zur chemischen Degradierung von üblichen Polypropylenen in der DE-AS 23 31 354 beschrieben sind, in Frage. Besonders bevorzugt werden Di-tert.butyl-peroxid und Bis(2(1,1-dimethylethyl)peroxyisopropyl)benzol, wie es z. B. als Perkadox® 14SFI bei Fa. Akzo kommerziell erhältlich ist, eingesetzt. Die Peroxide werden in einer Menge von etwa 0,001 bis 0,8 Gew.%, bevorzugt 0,05 bis 0,5 Gew.%, bezogen auf die Gesamtmenge der Polypropylene und elastischen Polypropylene, eingesetzt.

Die Degradierung gelingt besonders gut bei Temperaturen von 180 bis 260°C, besonders bevorzugt sind Temperaturen von 190 bis 240°C. Die Behandlungsdauer mit den Peroxiden beträgt mindestens 10 Sekunden, bevorzugt liegt sie bei 0,5 bis 2 min. Die Degradierung erfolgt besonders einfach und effizient kontinuierlich, beispielsweise in einem Extruder oder in einem kontinuierlichen Kneter.

Erfindungsgemäß ist es auch möglich, den Polypropylenen übliche Additive und/oder Füllstoffe zuzusetzen. Als Additive können beispielsweise Stabilisatoren und Gleitmittel zugesetzt werden. Als Stabilisatoren kommen beispielsweise Antioxydantien, Verarbeitungsstabilisatoren, Langzeitstabilisatoren oder Lichtschutzmittel in Frage. Stabilisatoren, die sich mit den Peroxiden als besonders gut verträglich erweisen, sind beispielsweise gemäß DE-AS 23 31 354 oder EP-B-0 290.386 beta-(3,5-Di-tertiär-butyl-4-hydroxy-phenyl)-propionsäure, insbesondere deren Ester mit Pentaerithrit oder Octadecanol, 1,3,5-Trimethyl-2,4,6-tris(3',5'-di-tertiärbutyl-4'-hydroxyphenyl)-benzol, 4-Hydroxy-methyl-2,6-ditertiär-butylphenol, Tris-(2'-methyl-4'-hydroxy-5'-tertiär-butylphenyl)-butan, 2,6-Di-tertiär-butyl-p-kresol-3,5-Dimethyl-4-hydroxy-benzyl-thioglykolsäure-stearylester und die Verbindung 2 : 1-Ni-Komplex des 3,5-Di-tertiär-butyl-4-hydroxybenzyl-phosphonsäuremonoäthylates, 2-(2'-Hydroxy-3',5'-di-tert.amyl-phenyl)-benzotriazol und 2,(2'-Hydroxy-3',5'-di-tert.butyl-phenyl)-5-chlor-benzotriazol sowie 2-Hydroxy-4-eta-octyloxy-benzophenon. Darüber hinaus können noch andere Stabilisatoren, beispielsweise aus der Gruppe der primären oder sekundären Antioxidantien oder aus der Gruppe der Lichtschutz- und Wärmestabilisatoren und Kombinationen davon eingesetzt werden. Bevorzugte Stabilisatoren sind 2,6-Di-tert.butyl-4-methyl-phenol, Pentaerythrityl-tetrakis-(3-(3,5-di-tert.butyl-4-hydroxy-phenyl)-propionat), Tris-(2,4-di-tert.butyl-phenyl)-phosphit und Tetrakis-(2,4-di-tert.butyl-phenyl)-4,4'-biphenylen-diphosphonit bzw. ihre Gemische.

Daneben kann es in vielen Fällen erforderlich sein, Gleit- bzw. Entformungshilfsmittel zur Erleichterung der Verarbeitbarkeit zuzusetzen. Als solche sind generell Salze der höheren Carbonsäuren wie etwa Stearinsäure mit Metallen der 2. Hauptgruppe oder der 2. Nebengruppe des Periodensystems geeignet. Bevorzugte Gleitmittel sind Calciumstearat oder Zinkstearat.

Als Füllstoffe kommen alle bekannten anorganischen oder organischen Füllstoffe in Frage, wie z. B. Kreide, Talkum, Kaolin, Glimmer oder Holzmehl.

### Beispiel 1:

### Herstellung eines elastischen Polypropylens (ELPP)

### a) Herstellung des Katalysators

44,22 g eines graubraun gefärbten Tetraneophylzirkon (TNZ; Tm= 66°C, Du Pont) wurden unter Reinststickstoffatmosphäre in 620 ml n-Hexan, gereinigt mittels eines Cu-Katalysators (BASF-Katalysator R 3-11® bei 70°C) zur Sauerstoffentfernung und 4-bzw. 10A-Molekularsieb zur Entfernung von Wasser und polaren Verunreinigungen bei 20°C in einem Schutzgaskolben gelöst. Die erhaltene Suspension wurde nach Absetzen des größten Teils des unlöslichen Rückstands nach 15 min über eine Glasfritte in einen auf -40°C gekühlten, gerührten Schutzgasglaskolben (ausgeheizt bei über 150°C und mit Reinststickstoff (unter 2ppm O₂) gespült) filtriert. Der Kolben wurde nach Abschluß der Filtration (Dauer ca. 140 min) noch 15 min unter Rühren bei -40°C gehalten, um das TNZ möglichst quantitativ auszufällen. Nach Absetzen des TNZ wurde die überstehende Lösung mittels einer Filterkerze unter N₂-Überdruck in einen weiteren gekühlten Schutzgaskolben filtriert. Das verbliebene TNZ wurde in weiteren 350 ml n-Hexan bei ca. 5 - 10°C während 15 min gelöst und nach Abkühlen auf -34°C erneut ausgefällt.

Nach Absetzen des TNZ-Niederschlags wurde die Lösung wieder mittels N2-Überdruck über eine Glasfilterkerze in den gekühlten Schutzgaskolben mit der ersten Mutterlauge filtriert. Anschließend wurde das TNZ durch Anlegen eines Ölpumpenvakuums (unter 1.10⁻² mbar) über zwischengeschaltete mit Flüssigstickstoff gekühlte Kühlfallen getrocknet. Das gereinigte TNZ zeigte einen Schmelzpunkt von 68°C und war weiß bis cremefarben. Die gesammelten Mutterlaugen wurden auf ca. 200 ml eingeengt und das noch gelöste TNZ durch Kühlen auf -40°C ausgefällt. Nach erneuter Druckfiltration über eine Filterkerze wurde das TNZ erneut in 100 ml Hexan gelöst, erneut bei -40°C ausgefällt, abfiltriert und mittels Vakuum wie oben getrocknet. Die Gesamtausbeute dieses Reinigungsprozesses betrug 82,2 %. Alle Operationen wurden unter Reinststickstoff durchgeführt.

In einen 6l-4-Hals-Schutzgaskolben wurden 266,7 g konditioniertes Al₂O₃ (Alumina C® von DEGUSSA, konditioniert bei ca. 800 - 1000°C im N2-Strom und nach Lagerung bei einer rel. Luftfeuchte von 50 % und 23°C während 16 h und erneuter Trocknung zur Einstellung einer optimalen Hydroxylkonzentration an der Oberfläche von ca. 1 mmol/g Alumina C® bei 400°C im Stickstoffstrom) eingewogen und mit 5035 ml n-Hexan, gereinigt mittels BASF-Katalysator R 3 - 11® und 4- bzw. 10A-Molekularsieb, versetzt. Die Suspension wurde ca. 1 h bei 300U/min gerührt. Dann wurden die oben hergestellten 33,23 g TNZ (ohne Produkt aus aufgearbeiteter Mutterlauge) in 465 ml n-Hexan (gereinigt wie oben) bei 20°C gelöst und diese TNZ-Lösung ehest unter fortwährendem Rühren zur Al₂O₃-Suspension während 50 min zugetropft, wobei nach Zugabe von wenigen ml TNZ-Lösung eine deutliche Viskositätsverminderung der Suspension eintrat. Nach Zugabe der TNZ-Lösung wurde die Drehzahl auf ca. 120 U/min verringert und weitere 12,5 h unter Lichtschutz gerührt. Zur Beschleunigung der Filtration wurde der erhaltene Katalysatorfeststoff 1 h absitzen gelassen und schließlich die Lösung mittels einer Druckfiltration über eine Glasfritte abgetrennt (Dauer 3 h). Anschließend wurde der Katalysatorfeststoff durch Anlegen eines Vakuum von unter 1.10⁻² mbar (Öldiffusionspumpe mit zwei zwischengeschalteten, flüssigstickstoffgekühlten Kühlfallen) unter Rühren bis zur Gewichtskonstanz von 292 g getrocknet (Dauer ca. 5 h). Alle Operationen wurden unter Reinststickstoff durchgeführt. Der erhaltene TNZ/Al₂O₃-Katalysator zeigte eine beige bis hellbraune Färbung und war ein frei fließendes Pulver, das eine Tendenz zur Bildung von kleinen Kugeln mit ca. 1 mm Durchmesser aufwies. Der Zr-Gehalt betrug 1,66 Gew.%.

### b) Polymerisation:

Ein bei 160°C und 0,1 mbar ausgeheizter 201-Doppelmantelreaktor mit wandgängigem, oberflächenpoliertem Rührer, Thermostatmantel, Temperatur-, Drehzahl- und Drehmomentmessung wurde nach drei Propen/Vakuumspülzyklen mit 7,3 kg Propen bei 25°C befüllt. Nach Hochfahren des Rührwerks auf 400 U/min wurden 10,02 g des gemäß a) hergestellten Katalysators mit 300 ml Flüssigpropen (ca. 20°C) eingespült und die Drehzahl nach 2 min auf 260 U/min reduziert. Anschließend wurde innerhalb von ca. 10 min die Propentemperatur auf 60°C erhöht und diese Temperatur ab Zugabe des Katalysators 120 min gehalten. Anschließend wurde die Rührerdrehzahl auf 200 U/min gesenkt und 1880 g auf ca. 50°C vorgewärmtes Aceton mittels Stickstoffüberdruck innerhalb von 3 min in den Reaktor eingebracht. Nach Erhöhung der Rührerdrehzahl auf 400U/min für ca. 2 min und anschließendes Senken auf 100 U/min wurde innerhalb von 20 min das nicht verbrauchte Propen bei 60 bis 46 °C abgeflasht. Der verbleibende ELPP (elastomeres Polypropylen)-Acetonslurry war rührbar und konnte über den 1-zölligen Bodenauslaß des Reaktors abgelassen werden.

Nach Filtration des ELPP und Trocknen im Stickstoffstrom bei 50°C erhielt man 1,88 kg eines pulvrig-krümeligen, nicht klebrigen ELPP mit einem Schmelzpunkt (Tm) von 148,1°C (gemessen mit einem Du Pont Differential Scanning Calorimeter 910/20 (Thermal Analyst 2100)), entsprechend einem bilanzierten Zr-Gehalt von 89 ppm und einem Al₂O₃-Gehalt von 0,49 Gew.%.

### Beispiel 2:

### Chemische Degradierung

Das gemäß Beispiel 1 erhaltene elastische Polypropylen wurde auf einer Brechmühle nach Abkühlung auf unter 0°C bis zu einer Korngröße von unter 3 mm gemahlen. Anschließend wurden 0,018 Gew.% Bis(2(1,1dimethylethyl)peroxyisopropyl)benzol (Perkadox® 14SFI, Fa. Akzo), bezogen auf die Menge des Polypropylens, eingemischt, das Gemisch auf einem 18 mm Brabender-Einschneckenextruder bei 220°C aufgeschmolzen und mit einem Ausstoß von 1 kg/h über eine Runddüse zu einem Strang von 3 mm Durchmesser extrudiert. Die Verweilzeit im Extruder betrug etwa 1 min. Der Strang wurde nach Erstarrung in einem Wasserbad granuliert. Dabei wurde das elastische Polypropylen bis zu einen MFI von 0,20 g/10 min degradiert. Die Messung des MFI erfolgte gemäß ISO 1133/DIN 53735 bei 230°C/2,16 kg. Die mechanische Charakterisierung des erhaltenen Polypropylens erfolgte im Zugversuch am Zugstab F4 gemäß DIN 53 457/1987. Die erforderlichen Probekörper wurden gemäß DIN 16774/1988 bei einer Massetemperatur von 250°C und einer Formtemperatur von 30°C hergestellt. Die erhaltenen Werte für den E-Modul, die Reißdehnung und den MFI sind in Tabelle 1 zusammengestellt.

### Beispiele 3 bis 6:

Das gemäß Beispiel 1 erhaltene elastische Polypropylen wurde analog zu Beispiel 2 degradiert, wobei jedoch die in Tabelle 1 angeführten höheren Peroxid-Mengen eingesetzt wurden. Die Knetertemperatur mußte dabei mit zunehmendem MFI auf bis zu 190°C gesenkt werden, um einen gut abziehbaren und glatten Strang zu erhalten. In Tabelle 1 sind auch die Werte für den E-Modul, die Reißdehnung, den MFI sowie die gemäß der Cox/Merz-Beziehung (vgl. W.P.Cox, E.Merz, J.Pol.Sci 28 (1958) 619) berechneten Werte für die Nullviskosität der bei der Degradierung erhaltenen Polypropylene zusammengestellt.

### Beispiele 7 bis 9:

Das gemäß Beispiel 1 erhaltene elastische Polypropylen wurde mit einem konventionellen isotaktischen Polypropylenpulver (Homopolymer, MFI 230°C/2,16 kg : 0,2 g/10 min, Daplen® BE 50, PCD Polymere) im Verhältnis 1 : 1 unter Zusatz von je 0,1 Gew.% Irganox® 1010 und Irgafos® 168 (Ciba-Geigy) als Stabilisatoren vermischt und anschließend analog zu Beispiel 2, jedoch mit unterschiedlichen Peroxidmengen, wie in Tabelle 1 angegeben, auf unterschiedliche MFI-Werte degradiert. Die Gew.% Peroxid und Stabilisatoren beziehen sich auf die Gesamtmenge der eingesetzten Polypropylene. In Tabelle 1 sind weiters die Werte für den E-Modul, die Reißdehnung, MFI und Nullviskosität zusammengestellt.

### Beispiele 10 und 11:

Das gemäß Beispiel 1 erhaltene elastische Polypropylen wurde mit einem konventionellen Polypropylenpulver (Block-Copolymer mit 12 Mol % Ethylen, MFI 230°C/2,16 kg : 0,2 g/10 min, Daplen® BHC 1012, PCD Polymere) im Verhältnis 1 : 1 unter Zusatz von je 0,1 Gew.% Irganox® 1010 und Irgafos® 168 (Ciba-Geigy) als Stabilisatoren vermischt und anschließend analog zu Beispiel 2, jedoch mit unterschiedlichen Peroxidmengen, wie in Tabelle 1 angegeben, auf unterschiedliche MFI-Werte degradiert. Die Gew.% Peroxid und Stabilisatoren beziehen sich auf die Gesamtmenge der eingesetzten Polypropylene. In Tabelle 1 sind weiters die Werte für den E-Modul, die Reißdehnung, MFI und Nullviskosität zusammengestellt.

**Tabelle 1**

| Eigenschaften der elastischen Polypropylene sowie ihrer Mischungen mit konventionellen Polypropylenen in Abhängigkeit vom Degradationsgrad | | | | | |
|---|---|---|---|---|---|
| Bsp. | Peroxid (Gew.%) | MFI (g/10 min) | Nullviskosität (Pa.s) | E-Modul (MPa) | Reißdehnung (%) |
| 1 | - | unter 0,01 | 2,10.10⁶ | 42,8 | 131 |
| 2 | 0,018 | 0,20 | 5,50.10⁵ | 27,8 | 497 |
| 3 | 0,040 | 0,97 | 1,30.10⁴ | 25,1 | 500 |
| 4 | 0,080 | 3,70 | 3,10.10³ | 23,8 | 664 |
| 5 | 0,18 | 15,5 | 7,50.10² | 23,5 | 845 |
| 6 | 0,25 | 32,0 | 4,50.10² | 21,9 | 1072 |
| | | | | | |
| 7 | 0,060 | 3,5 | 3,30.10³ | 172,5 | 590 |
| 8 | 0,098 | 11,7 | 9,10.10² | 168,3 | 679 |
| 9 | 0,15 | 26,0 | 4,50.10² | 163,5 | 733 |
| | | | | | |
| 10 | 0,07 | 4,8 | 2,00.10³ | 231 | 709 |
| 11 | 0,10 | 10,3 | 9,50.10² | 227 | 760 |

Wie aus Tabelle 1 zu ersehen ist, zeigen die bei der Degradierung erhaltenen elastischen Polypropylene sowie deren Gemische mit konventionellen Polypropylenen mit abnehmender Viskosität (entsprechend steigendem MFI) eine Zunahme der Reißdehnung als Maß für die elastischen Eigenschaften, sowie eine Abnahme des E-Moduls als Maß für die Steifigkeit. Die erhaltenen Polypropylene werden demnach mit steigendem MFI zunehmend sowohl elastischer als auch weicher. Dies ist besonders überraschend, da im Gegensatz dazu bei konventionellen Polypropylenen - wie in Tabelle 2 zusammengestellt - mit steigendem MFI der E-Modul zunimmt und die Reißdehnung abnimmt.

**Tabelle 2**

| Eigenschaften von konventionellen Polypropylenen | | | |
|---|---|---|---|
| | MFI (g/10 min) | E-Modul (MPa) | Reißdehnung (%) |
| Daplen® BM55 (PCD Polymere) | 0,4 | 1436 | 705 |
| Daplen® DS10 (PCD Polymere) | 2,4 | 1582 | 449 |
| Daplen® US 105A (PCD Polymere) | 50 | 1806 | 94 |

## Patentansprüche

1. Neue Polypropylene mit verbessertem Eigenschaftsprofil, erhältlich durch chemische Degradierung von elastischen Polypropylenen mit stereoregulärer Blockanordnung in der Polymerkette oder Gemischen von Polypropylenen und elastischen Polypropylenen mit stereoregulärer Blockanordnung in der Polymerkette mittels organischer Peroxide, gegebenenfalls unter Zusatz von üblichen Additiva und/oder Füllstoffen.

2. Neue Polypropylene gemäß Anspruch 1, dadurch gekennzeichnet, daß die zur Degradierung eingesetzten elastischen Polypropylene einen MFI (230°C/2,16 kg) von unter 0,1 g/10 min aufweisen.

3. Neue Polypropylene gemäß Anspruch 1 oder 2, dadurch gekennzeichnet, daß als Peroxide Bis(2(1,1-dimethylethyl)peroxyisopropyl)benzol oder Di-tert.butylperoxid eingesetzt werden.

4. Neue Polypropylene gemäß einem der Ansprüche 1 bis 3, dadurch gekennzeichnet, daß als Stabilisatoren 2,6-Di-tert.butyl-4-methyl-phenol, Pentaerythrityl-tetrakis-(3-(3,5-di-tert.butyl-4-hydroxy-phenyl)-propionat), Tris-(2,4-di-tert.butyl-phenyl)-phosphit oder Tetrakis-(2,4-di-tert. butyl-phenyl)-4,4'-biphenylen-diphsophonit bzw. ihre Gemische eingesetzt werden.

5. Verfahren zur Herstellung von neuen Polypropylenen mit verbessertem Eigenschaftsprofil, dadurch gekennzeichnet, daß elastische Polypropylene mit stereoregulärer Blockanordnung in der Polymerkette oder Gemische von Polypropylenen und elastischen Polypropylenen mit stereoregulärer Blockanordnung in der Polymerkette mittels organischer Peroxide, gegebenenfalls unter Zusatz von üblichen Additiven und/oder Füllstoffen, degradiert werden.

6. Verfahren gemäß Anspruch 5, dadurch gekennzeichnet, daß 0,05 bis 0,5 Gew.% Peroxide, bezogen auf die Menge der Polypropylene verwendet werden.

7. Verfahren gemäß Anspruch 5 cder 6, dadurch gekennzeichnet, daß die Degradierung bei Temperaturen von 190 bis 240°C erfolgt.

8. Verfahren gemäß einem der Ansprüche 5 bis 7, dadurch gekennzeichnet, daß die Degradierung kontinuierlich in einem Extruder erfolgt.

## Revendications

1. Nouveaux polypropylènes ayant des propriétés améliorées, qu'on peut obtenir par dégradation chimique de polypropylènes élastiques avec un agencement stéréorégulier des séquences dans la chaîne polymère, ou de mélanges de polypropylènes et de polypropylènes élastiques avec un agencement stéréorégulier des séquences dans la chaîne polymère, au moyen de peroxydes organiques, éventuellement en ajoutant des additifs et/ou des charges usuels.

2. Nouveaux polypropylènes selon la revendication 1, caractérisés en ce que les polypropylènes élastiques utilisés pour la dégradation présentent un MFI (230°C/2,16 kg) inférieur à 0,1 g/10 min.

3. Nouveaux polypropylènes selon la revendication 1 ou 2, caractérisés en ce qu'on utilise, comme peroxydes, le bis(2(1,1-diméthyléthyl)peroxyisopropyl)benzène ou le peroxyde de di-tert-butyle.

4. Nouveaux polypropylènes selon l'une des revendications 1 à 3, caractérisés en ce qu'on utilise, comme stabilisants, le 2,6-di-tert-butyl-4-méthyl-phénol, le penta-érythrityl-tétrakis-(3-(3,5-di-tert-butyl-4-hydroxyphényl)-propionate), le phosphite de tris-(2,4-di-tert-butylphényle) ou le diphosphonite de tétrakis-(2,4-di-tert-butylphényl)-4,4'-biphénylène, et leurs mélanges.

5. Procédé de préparation de nouveaux polypropylènes ayant des propriétés améliorées, caractérisé en ce qu'on dégrade des polypropylènes élastiques ayant un agencement stéréorégulier des séquences dans la chaîne polymère, ou des mélanges de polypropylènes et de polypropylènes élastiques ayant un agencement stéréorégulier des séquences dans la chaîne polymère, au moyen de peroxydes organiques, éventuellement en ajoutant des additifs et/ou des charges usuels.

6. Procédé selon la revendication 5, caractérisé en ce qu'on utilise de 0,05 à 0,5 % en poids de peroxydes par rapport à la quantité de polypropylènes.

7. Procédé selon la revendication 5 ou 6, caractérisé en ce que la dégradation se déroule à des températures de 190 à 240°C.

8. Procédé selon l'une des revendications 5 à 7, caractérisé en ce que la dégradation se déroule en continu dans une extrudeuse.

## Claims

1. New polypropylenes having an improved profile of properties which are obtainable by chemical degradation of elastic polypropylenes having a stereoregular block arrangement in the polymer chain or mixtures of polypropylenes and elastic polypropylenes having a stereoregular block arrangement in the polymer chain by means of organic peroxides, if appropriate with the addition of customary additives and/or fillers.

2. New polypropylenes according to Claim 1, characterized in that the elastic polypropylenes employed for the degradation have an MFI (230°C/2.16 kg) of less than 0.1 g/10 minutes.

3. New polypropylenes according to Claim 1 or 2, characterized in that bis(2(1,1-dimethylethyl)peroxyisopropyl)benzene or di-tert-butyl peroxide are employed as peroxides.

4. New polypropylenes according to one of Claims 1 to 3, characterized in that 2,6-di-tert-butyl-4-methylphenol, pentaerythrityltetrakis-(3-(3,5-di-tert-butyl-4-hydroxy-phenyl)-propionate), tris-(2,4-di-tert-butyl-phenyl) phosphite or tetrakis-(2,4-di-tert-butyl-phenyl) 4,4'-biphenylene-diphosphonite or mixtures thereof are employed as stabilizers.

5. Process for the preparation of new polypropylenes having an improved profile of properties, characterized in that elastic polypropylenes having a stereoregular block arrangement in the polymer chain or mixtures of polypropylenes and elastic polypropylenes having a stereoregular block arrangement in the polymer chain are degraded by means of organic peroxides, if appropriate with the addition of customary additives and/or fillers

6. Process according to Claim 5, characterized in that 0.05 to 0.5 % by weight of peroxides, based on the amount of polypropylenes, are used.

7. Process according to Claim 5 or 6, characterized in that the degradation is carried out at temperatures of 190 to 240°C.

8. Process according to one of Claims 5 to 7, characterized in that the degradation is carried out continuously in an extruder.
